# EUROPÄISCHE PATENTANMELDUNG

(11) **EP 2 442 049 A2**
(43) Veröffentlichungstag der Anmeldung: **18.04.2012**
(21) Anmeldenummer: 11185092.1
(22) Anmeldetag: 13.10.2011
(51) Int. Cl.: F24J 2/52

(54) **Solaranlagen-Montagesystem**

(30) Priorität: 13.10.2010 DE 102010042422; 16.03.2011 DE 102011001339
(71) Anmelder: Opitz, Martin, 50935 Köln (DE)
(72) Erfinder: Opitz, Martin, 50935 Köln (DE)
(74) Vertreter: Bauer Vorberg Kayser Patentanwälte

(57) **Zusammenfassung**

Solaranlagen-Montagesystem aufweisend ein Trägerelement (10) mit einer Auflagefläche (12) für mindestens ein Solarmodul (20), und einer Bodenfläche (14) zum Aufsetzten des Trägerelementes (10) auf einen Untergrund (30), bzw. einer Unterkonstruktion, wobei das Trägerelement (10) mindestens eine Haltevorrichtung (16) zur Aufnahme eines Endabschnittes (42) eines Flächenelementes (40) aufweist.

## Beschreibung

Die vorliegende Erfindung bezieht sich im Allgemeinen auf ein Solaranlagen-Montagesystem, mit dem Solarmodule oder Kollektoren auf oder innerhalb der Dachhaut oder an einem beliebigen anderen Ort außerhalb eines Daches befestigbar sind.

Unter dem Begriff Solarmodule werden in der vorliegenden Erfindung sämtliche Module verstanden zur Umwandlung der im Sonnenlicht enthaltenen Energie verstanden, beispielsweise Photovoltaikmodule oder Module zur Gewinnung Solarthermischer Energie.

Zur Befestigung von derartigen Solarmodulen auf Flachdächern, Schrägdächern, Freiflächen, etc. ist eine Vielzahl von Montagesystemen bekannt.

Die Mehrzahl der Ausführungsarten der Montagesysteme beruhen auf dem Grundprinzip, dass auf der Dachhaut Quer- und Längsbalken aufgebracht sind, auf denen mittels Befestigungselementen oder ähnlichen Teilen die Solarmodule, die vorzugsweise einzeln gerahmt sind, gehalten werden. Dabei wird das Befestigungssystem mit einem Abstand zur Dachhaut befestigt, was auch als Aufständerung bezeichnet wird. Derartige Befestigungssysteme sind in der Regel kompliziert gestaltet und erfordern sowohl eine schwierige und zeitintensive Montage als auch eine hohe Anzahl an Montage- und Befestigungselementen. Solarmodule werden oftmals auch auf Carports verwendet, die ein Ständerwerk aufweisen, das Solarmodule hält, die als Dach fungieren. Nachteilig ist bei solchen Konstruktionen, dass das Dach bzw. die Solarmodule von unten oft unschön aussehen. Aus diesem Grunde befindet sich unterhalb der Solarmodule oftmals eine aufwendig gestaltete Verkleidung aus Holz oder Kunststoff.

Die Aufgabe der vorliegenden Erfindung besteht darin, ein konstruktiv einfaches, universell einsetzbares Solaranlagen-Montagesystem zu schaffen, welches sowohl für die Anordnung von Solarmodulen auf einer Dachhaut als auch zur Herstellung einer aus Solarmodulen bestehenden Dachhaut selbst geeignet ist. Es soll sich für Flach- oder Schrägdachkonstruktionen einschließlich für Dächer von Carports eignen. Bei Ausfall eines einzelnen Moduls soll dieses beschädigte Modul auch problemlos ausgetauscht werden können. Insbesondere soll die Konstruktion dabei auch eine optisch variable und ansprechende Rückseite aufweisen oder ermöglichen.

Erfindungsgemäß wird die Aufgabe durch ein Solaranlagen-Montagesystem zur Befestigung eines Solarmoduls oder Verbindungsstücks mit den Merkmalen des Anspruchs 1 gelöst, das nach denen ein Trägerelement eine Auflagefläche für mindestens ein Solarmodul und eine Bodenfläche zum Aufsetzen des Trägerelementes auf einen Untergrund bzw. einer Unterkonstruktion umfasst, und wobei das Trägerelement wenigstens eine Haltevorrichtung zur Aufnahme eines Endabschnittes eines Flächenelementes aufweist.

Diese Haltevorrichtung zur Aufnahme eines Endabschnittes eines Flächenelementes ermöglicht, dass zwischen zwei nebeneinander angeordneten Trägerelementen ein Flächenelement eingefügt werden kann, und auf diese Weise die Rückansicht der Solarmodule optisch variabel anpassbar ist.

Vorzugsweise kann das Trägerelement wenigstens zwei entgegengesetzt ausgerichtete Haltevorrichtungen aufweisen, welche jeweils die Aufnahme eines Endabschnitts eines Flächenelementes ermöglichen, so dass zwei Flächenelemente nebeneinander, nur getrennt durch das Trägerelement, angeordnet werden können. Dadurch ergibt sich eine geschlossene, optisch ansprechende Fläche. Grundsätzliche kann sowohl die Ausführungsform der Haltevorrichtung als auch die Art und Weise der Anbringung der Haltevorrichtung am Trägerelement, beispielsweise innenliegend oder außenliegend, variabel sein.

Erfindungsgemäß kann das Flächenelement beliebig ausgeführt sein, beispielsweise aus festen Materialien wie Holz, Kunststoff oder Metall, vorzugsweise aber aus einem flexiblen Material wie einer Folie oder einer Plane ausgebildet sein.

In einer besonders bevorzugten Ausführungsform der Erfindung kann das Flächenelement als Folie oder Plane ausgebildet sein, dessen Endabschnitte vorzugsweise einen Keder mit einer Kederfahne aufweisen, wobei auch die Haltevorrichtung als Kederschiene ausgebildet ist, so dass das Flächenelement mittels Keder und Kederfahne entsprechend in die Haltevorrichtung und somit in die Kederschiene eingebracht und gespannt werden kann. Die Montage und auch ein Austausch der Flächenelemente ist somit sehr schnell und einfach möglich.

In einer weiterführenden Ausführungsform kann die Haltevorrichtung ein in Richtung des Untergrundes weisendes L-förmiges Element ausbilden, in das erfindungsgemäß eine U-förmig ausgebildete Kunststoffplatte und/oder ein U-förmig ausgebildetes Metallblech eingebracht werden kann, dass als Sichtschutz wirkt.

Vorzugsweise ist die Oberfläche des erfindungsgemäßen Flächenelementes farbig, transparent, blickdicht, bedruckt und/oder beschriftet, so dass das Flächenelement die unterschiedlichsten Formen und Farben aufweisen kann, wodurch die eventuell für den Betrachter sichtbaren Rückseiten der Solarmodule optisch variabel verkleidet werden können. Ein wesentlicher Vorteil besteht, darin, dass die Flächenelemente somit auch für wechselnde Informationen oder Werbebotschaften verwendbar sind, insbesondere wenn sie in Verbindung mit einem Carport verwendet werden.

Ferner kann das Flächenelement in einer vorteilhaften Ausführungsform einzeln ausgewechselt werden, beispielsweise bei einer eventuellen Beschädigung des Flächenelementes. Ein späterer Austausch des Flächenelementes ist jederzeit möglich, so dass beispielsweise bei einem Inhaberwechsel eines Gebäudes oder Bauwerks, an dem das Solarmodul angebracht ist, die Farbe und/oder die Beschriftung der sichtbaren Flächenelemente ausgetauscht und an den Inhaberwusch individuell angepasst werden können.

Des Weiteren ist es auch möglich, dass die Auflagefläche des Trägerelementes wenigstens ein Aufnahmeelement aufweist, das als Anlagefläche für die Solarmodule dient. Erfindungsgemäß kann das Aufnahmeelement wenigstens ein Steg und/oder eine Nut sein und längs zum Trägerelement verlaufen. Die Dicke und/oder Höhe der Stege kann variabel sein.

Grundsätzlich ist auch denkbar, dass anstelle eines Solarmoduls ein Verbindungsstück an dem Trägerelement befestigt werden kann, welches beispielsweise als Adapter für andersartig ausgebildete Solarmodule ausgebildet ist, so dass auch nicht direkt mit dem Montagesystem zusammenpassende Solarmodule unmittelbar oder mittelbar auf den Trägerelementen befestigt werden können. Die Verbindungsstücke müssen dabei so ausgebildet sein, dass sie Endabschnitte aufweisen, die in die erfindungsgemäßen Aufnahmeelemente eingeführt werden können.

Desweiteren ist auch denkbar, dass die jeweiligen Aufnahmeelemente eine Art Verriegelungselement aufweisen, damit das Solarmodul bzw. das Verbindungsstück in dem Aufnahmeelement fixiert werden kann.

In einer besonders vorteilhaften Variante kann das Trägerelement einen Querschnitt aufweisen, welches mit Hilfe von Befestigungsmitteln am Untergrund befestigbar ist. So kann beispielsweise ein I-Profil vorgesehen sein, das eine langgestreckten Steg und seitliche davon angeordnete Seitenflansche aufweist, über die das Trägerelement mit dem Untergrund befestigt werden kann wird. Ferner ist denkbar, dass das Trägerelement über ein zusätzliches Halteelement, insbesondere eine Nagelplatte, mit dem Untergrund bzw. mit einer Unterkonstruktion, beispielsweise den Quer- und/oder Längsbalken eines Daches, verbindbar ist. Das Halteelement weist ein Kopfelement auf, das in einen Kanal des Trägerelementes einführbar ist. Nachdem die Halteelemente an der Unterkonstruktion befestigt wurden, können die Trägerelemente mit den Kanälen auf die Kopfelemente aufgeschoben werden. Die Kopfelemente hinter greifen Schultern innerhalb des Kanals und halten somit die Trägerelemente quer zur Längsrichtung der Kanäle.

Bei dieser besonders bevorzugten Ausführungsform ist das Trägerelement in Längsrichtung bewegbar bzw. verschiebbar, bevor es endgültig befestigt wird, was das Ausrichten der Solarmodule deutliche erleichtert.

Die Erfindung betrifft ferner einen Carport mit wenigstens zwei der oben genannten Solaranlagen-Montagesysteme, wobei wenigstens ein Solarmodul zwischen dem ersten Solaranlagen-Montagesystems und dem zweiten Solaranlagen-Montagesystems befestigt ist. Bei einer derartigen Anordnung kann ein Trägerelement, vorzugsweise aber jedes Trägerelement am Untergrund befestigt sein, wobei erfindungsgemäß das erste Trägerelement beabstandet vom zweiten Trägerelement, vorzugsweise parallel zu diesem, angeordnet ist. Der Abstand der Trägerelemente entspricht im Wesentlichen der Länge oder Breite eines Solarmoduls. Entsprechend ist es vorteilhaft, wenn der Untergrund bzw. die Unterkonstruktion wenigstens eine, vorzugsweise mehrere im Wesentlichen parallel angeordnete Pfetten oder Bohlen umfasst, welche im Wesentlichen senkrecht zur Ausrichtung der Trägerelemente angeordnet sind.

Die Anordnung weist vorzugsweise ein drittes Trägerelement auf, das parallel zum ersten Trägerelement und zum zweiten Trägerelement angeordnet ist, und ein zweites Solarmodul, das benachbart zum ersten Solarmodul zwischen dem zweiten Trägerelement und dem dritten Trägerelement befestigt ist. Dabei sind die Endabschnitte bzw. Randbereiche des ersten Solarmoduls vorzugsweise zwischen dem Aufnahmeelement des ersten Trägerelementes und dem Aufnahmeelement des zweiten Trägerelementes, und die Endabschnitte bzw. Randbereiche des zweiten Solarmoduls vorzugsweise zwischen dem Aufnahmeelement des zweiten Trägerelementes und dem Aufnahmeelement des dritten Trägerelementes gehalten.

In einer bevorzugten Ausführungsform weist ein Trägerelement wenigstens zwei Aufnahmeelemente auf, so dass das Solarmodul zwischen einem ersten Aufnahmeelement des ersten Trägerelementes und einem zweiten Aufnahmeelement des zweiten Trägerelementes gehalten ist. Entsprechend sind die Öffnungen der Aufnahmeelemente entgegengesetzt ausgerichtet, um jeweils den Endabschnitt bzw. Randbereich eines Solarmoduls aufzunehmen. Sowohl das erste Solarmodul als auch das zweite Solarmodul sind in wenigstens einem der entgegen gerichteten Aufnahmeelementen befestigt. Auf diese Weise kann ein Trägerelement zur Befestigung zweier Solarmodule verwendet werden, die beidseitig jeweils an den Endabschnitten bzw. den Randbereichen am entsprechenden Trägerelement angeordnet sind.

Vorteilhaft an dem erfindungsgemäßen Solaranlagen-Montagesystem und an der erfindungsgemäßen Anordnung sind die einfache Gestaltung der Trägerelemente selbst sowie die einfache Handhabung bei der eigentlichen Montage der einzelnen Solarmodule. Ferner sind die Trägerelemente des vorliegenden Solaranlagen-Montagesystems entweder mit der vorhandenen Dachhaut oder mit der Dachunterkonstruktion oder mit beiden fest verschraubt, wodurch ein hoher Widerstand gegen Windlast erreicht wird. Hinzu kommt, dass die installierten Flächenelemente unabhängig voneinander einzeln austauschbar sind und somit die Farbe und/oder die Beschriftung sowohl bei der Erstmontage der Flächenelemente als auch bei einer Reparatur oder Überarbeitung der Flächenelemente individuell angepasst werden können.

Das Solaranlagen-Montagesystem eignet sich besonders vorteilhaft für die Solarmodulinstallation als dichte Dachhaut direkt auf eine Dachunterkonstruktion aus Sparren und Dachlatten.

Neben der relativ leichten Möglichkeit der Auswechslung einzelner Solarmodule ist auch eine Erweiterung der Anlage leicht möglich.

Weitere Merkmale und Vorteile der Erfindung ergeben sich aus den nachfolgenden Figuren, in denen auch die in der Beschreibung verwendeten Begriffe der vorliegenden Erfindung näher beschrieben werden. Dabei zeigen:
- Fig. 1: eine schematische Ansicht einer ersten Variante eines erfindungsgemäßen Solaranlagen-Montagesystems;
- Fig. 2: eine schematische Ansicht einer zweiten Variante eines erfindungsgemäßen Solaranlagen-Montagesystems;
- Fig. 3: eine schematische Ansicht einer dritten Variante eines erfindungsgemäßen Solaranlagen-Montagesystems;
- Fig. 4: eine schematische Ansicht einer vierten Variante eines erfindungsgemäßen Solaranlagen-Montagesystems;
- Fig. 5: eine schematische Ansicht einer fünften Variante eines erfindungsgemäßen Solaranlagen-Montagesystems.

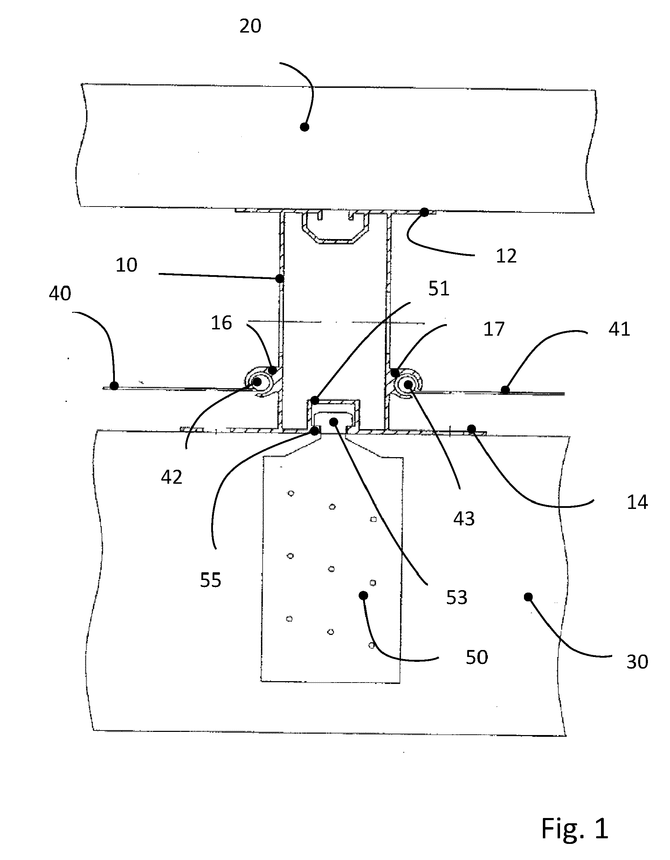

Zunächst wird auf Figur 1 Bezug genommen, in der eine erste Variante eines möglichen Ausführungsbeispiels eines erfindungsgemäßen Solaranlagen-Montagesystems dargestellt ist. Dieses weist ein Trägerelement 10 mit einer Auflagefläche 12 und einer Bodenfläche 14 auf. Das Trägerelement 10 ist über ein Halteelement 50 mit einem Untergrund 30 bzw. einer Unterkonstruktion, beispielsweise einer Dachpfette, fest verbunden, wobei das Haltelement 50 im dargestellten Ausführungsbeispiel als Nagelplatte ausgebildet ist. Das Trägerelement 10 weist einen Kanal 51 auf, in dem ein Kopfelement 52 des Halteelementes 50 hineinragt und das Trägerelement 10 über einen Hinterschnitt 55 hält.

Auf der Auflagefläche 12 ist ein Solarmodul 20 befestigt, welches vollständig auf dem Trägerelement 10 aufliegt.

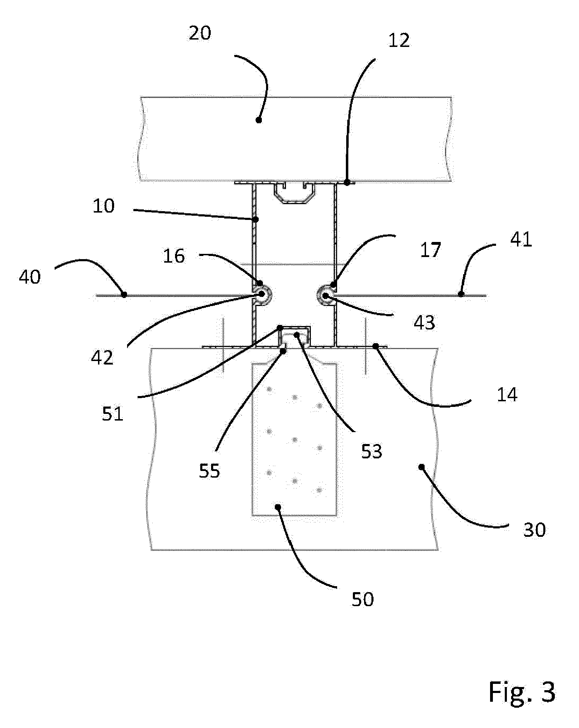

Zwischen dem Untergrund 30 und dem Solarmodul 20 befindet sich ein erstes Flächenelement 40, welches einen Endabschnitt 42, und ein zweites Flächenelement 41, welches einen Endabschnitt 43, aufweist. Die Endabschnitte 42, 43 der Flächenelemente 40, 41 sind im vorliegenden Ausführungsbeispiel als Keder mit Kederfahne ausgebildet, und über eine erste Haltevorrichtung 16 und eine zweite Haltevorrichtung 17 mit dem Trägerelement 10 verbunden. Die Haltevorrichtungen 16, 17 sind entsprechend als Kederschienen ausgebildet, so dass die Flächenelemente 40, 41 mittels Kederschiene, Keder und Kederfahne in das Trägerelement 10 eingeführt und gespannt werden können. Im dargestellten Ausführungsbeispiel sind die Haltevorrichtungen 16, 17 außenliegend mit dem Trägerelement 10 verbunden. Grundsätzliche können sowohl die Ausführungsformen als auch die Art und Weise der Anbringung der Haltevorrichtungen 16, 17 variieren. Bei den Flächenelementen 40, 41 handelt es sich um Folien und/oder Planen, deren Größe und Farbe je nach Ausführungsform variabel sind. Möglich ist aber auch, dass die Flächenelemente 40, 41 als Kunststoffplatte und/oder Metallblech ausgeführt sind und beispielsweise ein U-förmiges Profil aufweisen. Diese können dann über eine L-förmige Haltevorrichtung 16, 17 mit dem Trägerelement 10 verbunden werden (siehe Figur 3). Auch die Kunststoffplatten und/oder Metallbleche können in Größe und Farbe variieren und individuell angepasst werden.

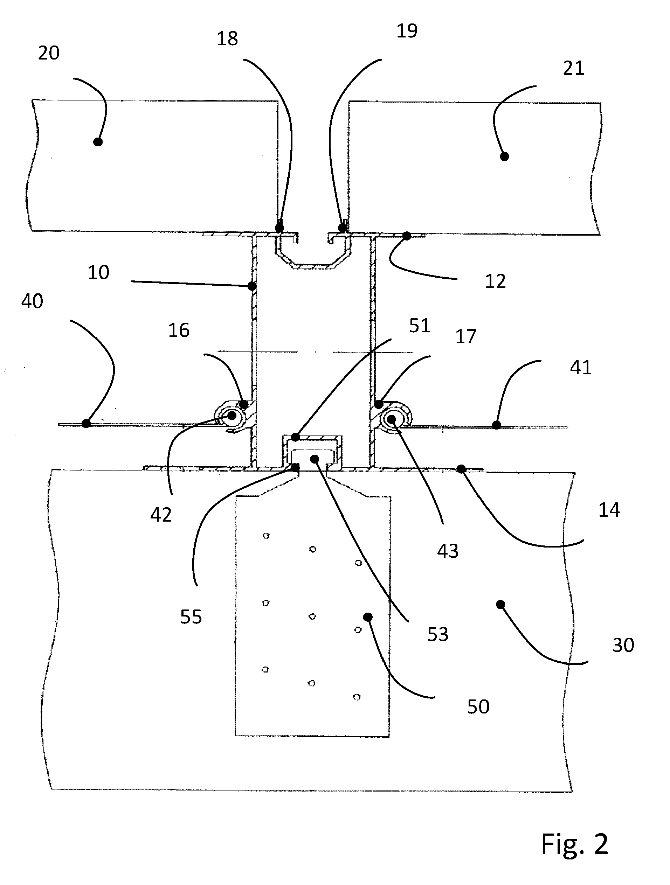

Figur 2 zeigt eine zweite Variante eines erfindungsgemäßen Solaranlagen-Montagesystems, welches sich von der in Figur 1 dargestellten Variante dahingehend unterscheidet, als dass die Auflagefläche 12 des Trägerelementes 10 zwei entgegengesetzt ausgerichtete Aufnahmeelemente 18, 19 aufweist, welche jeweils die Aufnahme eines Endabschnitts eines Solarmoduls 20, 21 ermöglichen. Die Aufnahmeelemente 18, 19 weisen somit in entgegengesetzte Richtung, so dass das Trägerelement 10 im ersten Aufnahmeelement 18 den Endabschnitt bzw. Randbereich des ersten Solarmoduls 20 und in dem zweiten Aufnahmeelement 19 den Endabschnitt bzw. Randbereich des zweiten, benachbart angeordneten Solarmoduls 21 aufnimmt. Somit wird das Solarmodul 21 von dem zweiten Aufnahmeelement 18 des ersten Trageelementes 10 und einem ersten Aufnahmeelement (nicht dargestellt) eines zweiten Trägerelementes (nicht dargestellt) gehalten. Entsprechend sind die Öffnungen der Aufnahmeelemente 18, 19 entgegengesetzt ausgerichtet, um jeweils den Endabschnitt bzw. Randbereich eines Solarmoduls aufzunehmen. Auf diese Weise kann ein Trägerelement 10 zur Befestigung zweier Solarmodule 20, 21 verwendet werden.

Figur 3 zeigt eine dritte Variante eines erfindungsgemäßen Solaranlagen-Montagesystems, welches sich von der in Figur 1 dargestellten Variante dahingehend unterscheidet, dass die Haltevorrichtungen 16, 17 als innenliegende Kederschienen unmittelbar in das Trägerelement 10 integriert sind. Auch bei dieser Variante können die Flächenelemente 40, 41 mittels Kederschiene, Keder und Kederfahne in das Trägerelement 10 eingeführt und gespannt werden.

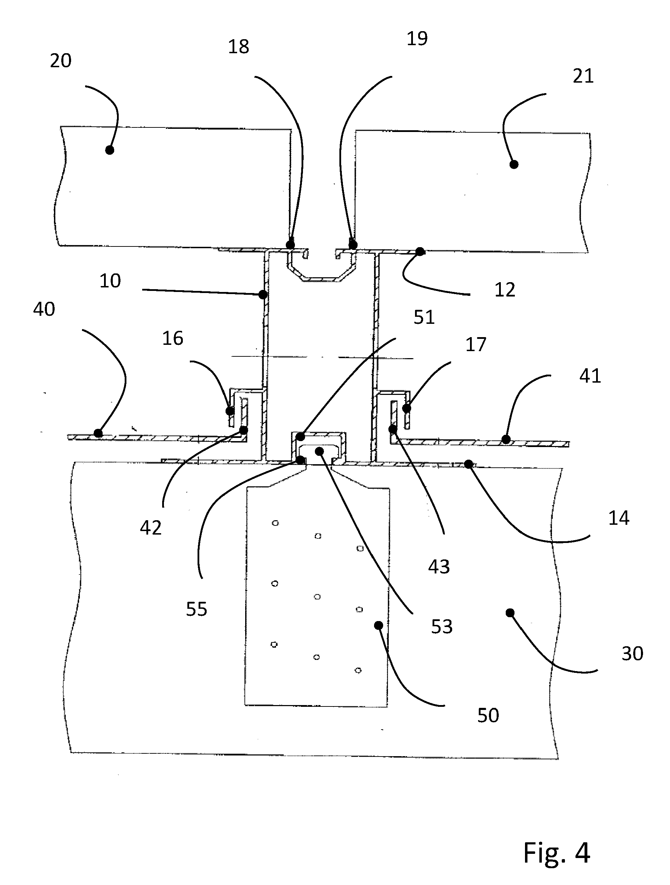

Figur 4 zeigt eine vierte Variante eines erfindungsgemäßen Solaranlagen-Montagesystems, welches sich von der in Figur 2 dargestellten Variante dahingehend unterscheidet, dass die Flächenelemente 40, 41 als Kunststoffplatte und/oder Metallblech ausgeführt sind und ein U-förmiges Profil aufweisen. Diese werden über eine L-förmige Haltevorrichtung 16, 17 mit dem Trägerelement 10 verbunden.

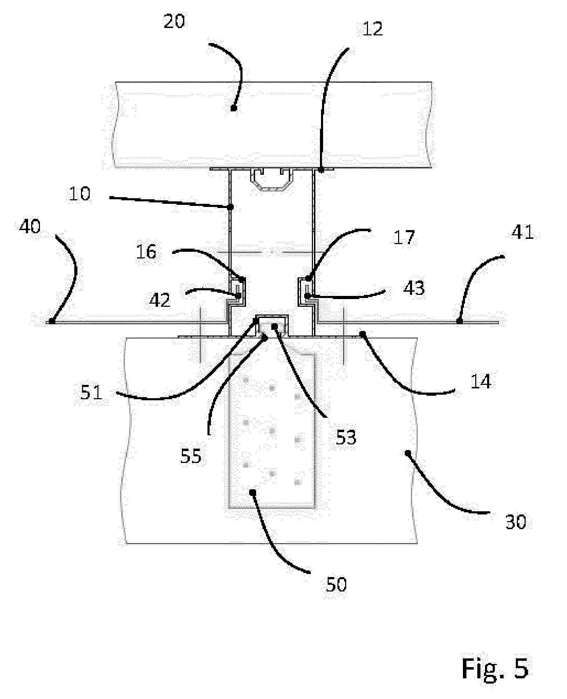

Figur 5 zeigt eine fünfte Variante eines erfindungsgemäßen Solaranlagen-Montagesystems, welches sich von der in Figur 4 dargestellten Variante dahingehend unterscheidet, dass die die Haltevorrichtungen 16, 17 innenliegend in das Trägerelement 10 integriert sind. Die Flächenelemente 40, 41 sind als Kunststoffplatte und/oder Metallblech ausgeführt und weisen entsprechend ein derartiges Profil auf, dass sie formschlüssig mit den innenliegenden Haltevorrichtungen 16, 17 verbunden werden können.

Die Erfindung ist nicht auf die beschriebenen Ausführungsbeispiele beschränkt. Diese dienen lediglich der Verdeutlichung der Erfindung.

## Patentansprüche

1. Solaranlagen-Montagesystem aufweisend ein Trägerelement (10) mit einer Auflagefläche (12) für mindestens ein Solarmodul (20) und einer Bodenfläche (14) zum Aufsetzen des Trägerelementes (10) auf einen Untergrund (30) bzw. einer Unterkonstruktion, **dadurch gekennzeichnet, dass** das Trägerelement (10) mindestens eine Haltevorrichtung (16) zur Aufnahme eines Endabschnittes (42) eines Flächenelementes (40) aufweist.

2. Solaranlagen-Montagesystem nach Anspruch 1, **dadurch gekennzeichnet, dass** das Trägerelement (10) wenigstens zwei entgegengesetzt ausgerichtete Haltevorrichtungen (16) zur Aufnahme jeweils eines Endabschnittes (42) eines Flächenelementes (40) aufweist.

3. Solaranlagen-Montagesystem nach Anspruch 1 oder 2, **dadurch gekennzeichnet, dass** das Flächenelement (40) aus einem flexiblen Material gebildet ist.

4. Solaranlagen-Montagesystem nach Anspruch 1 oder 2, **dadurch gekennzeichnet, dass** das Flächenelement (40) aus einem festen Material gebildet ist.

5. Solaranlagen-Montagesystem nach einem der vorhergehenden Ansprüche, **dadurch gekennzeichnet, dass** das Flächenelement (40) einen Endabschnitt (40) mit einem Keder und einer Kederfahne aufweist und die Haltevorrichtung (16) als Kederschiene ausgebildet ist.

6. Solaranlagen-Montagesystem nach einem der Ansprüche 1 bis 3, **dadurch gekennzeichnet, dass** die Haltevorrichtung (16) durch ein in Richtung des Untergrundes (30) weisendes L-förmiges Element gebildet ist und das Flächenelement (40) U-förmig ausgebildet ist.

7. Solaranlagen-Montagesystem nach einem der vorhergehenden Ansprüche, **dadurch gekennzeichnet, dass** das die Auflagefläche (12) des Trägerelementes (10) wenigstens ein Aufnahmeelement (18) aufweist, das als Ausrichtungshilfe für die Solarmodule (20) dient.

8. Solaranlagen-Montagesystem nach einem der vorhergehenden Ansprüche, **dadurch gekennzeichnet, dass** das wenigstens eine Aufnahmeelement (18) als Steg ausgebildet ist und längs entlang des Trägerelements (10) verläuft.

9. Solaranlagen-Montagesystem nach einem der vorhergehenden Ansprüche, **dadurch gekennzeichnet, dass** das Trägerelement (10) lösbar über wenigstens ein Halteelement (50) mit dem Untergrund (30) verbindbar ist, wobei das Trägerelement (10) einen Kanal (51) mit einer dem Halteelement (50) zugewandten Öffnung aufweist, in den ein Kopfelement (53) des Halteelementes (50) einführbar ist und das Trägerelement (10) über einen Hinterschnitt in vertikaler Richtung auf den Untergrund (30) hält.

10. Solaranlagen-Montagesystem nach Anspruch 9, **dadurch gekennzeichnet, dass** das wenigstens eine Halteelement (50) eine Nagelplatte ist.

11. Carport, umfassend wenigstens zwei Solaranlagen-Montagesysteme nach einem der Ansprüche 1 bis 10, **dadurch gekennzeichnet, dass** wenigstens ein Solarmodul (20) zwischen dem ersten Solaranlagen-Montagesystem und dem zweiten Solaranlagen-Montagesystem befestigt ist.
